# EUROPÄISCHE PATENTSCHRIFT

(11) **EP 1 394 482 B1**
(45) Veröffentlichungstag und Bekanntmachung des Hinweises auf die Patenterteilung: **08.09.2010**
(21) Anmeldenummer: 03015411.6
(22) Anmeldetag: 09.07.2003
(51) Int. Cl.: F25B 7/00, F25B 30/02, F25B 25/00

(54) **Wärmepumpenanlage**
Heat pump system
Installation de pompe à chaleur

(30) Priorität: 30.08.2002 DE 10240767
(43) Veröffentlichungstag der Anmeldung: 03.03.2004
(73) Patentinhaber: Glen Dimplex Deutschland GmbH, 95326 Kulmbach (DE)
(72) Erfinder: Shirkhani, Ghanbar, 95119 Naila (DE); Kohlmann, Frank, 95236 Kulmbach (DE); Trempel, Daniela, 95361 Ködnitz (DE)
(74) Vertreter: Tergau & Pohl Patentanwälte

(56) Entgegenhaltungen:
- CH-A- 155 065
- DE-A1- 2 112 362
- DE-A1- 2 940 079
- DE-A1- 3 134 276
- US-A- 4 391 104
- PATENT ABSTRACTS OF JAPAN Bd. 017, Nr. 053 (M-1361), 3. Februar 1993 (1993-02-03) -& JP 04 263758 A (KANSAI ELECTRIC POWER CO INC:THE; others: 03), 18. September 1992 (1992-09-18)

## Beschreibung

Die Erfindung betrifft eine Wärmepumpenanlage, welche zu Heiz- und/oder Kühlzwecken nutzbar ist, nach dem Oberbegriff des Anspruchs 1. Eine derartige Wärmepumpenanlage ist beispielsweise aus der DE 33 11 505 C2 oder der US 4 391 104 bekannt.

Eine Wärmepumpenanlage, insbesondere für die Beheizung eines Gebäudes, ist in der Regel mit einem einstufigen Kältekreislauf ausgebildet. Eine Ausbildung mit einem mehrstufigen Kältekreislauf ist ebenso möglich, erhöht jedoch den konstruktiven Aufwand wesentlich.

Die aus der DE 33 11 505 C2 bekannte Wärmepumpenanlage weist zwei Kältekreisläufe auf, wobei ein Verflüssiger im ersten Kältekreislauf zugleich als Verdampfer im zweiten Kältekreislauf benutzt wird. In einem Verdampfer des ersten Kältekreislaufs nimmt dessen Arbeitsmittel Wärme aus einem Medium einer Wärmequelle auf. Zur Wärmeabgabe an ein Heizmedium ist ein Verflüssiger des zweiten Kältekreislaufs vorgesehen. Beide Kältekreisläufe enthalten zusätzlich jeweils einen Wärmetauscher, welcher vom Medium der Wärmequelle durchflossen wird, bevor dieses dem Verdampfer des ersten Kältekreislaufs zugeführt wird.

Der Erfindung liegt die Aufgabe zugrunde, eine Wärmepumpenanlage anzugeben, welche bei einfachem Aufbau eine besonders flexible Nutzung erlaubt.

Diese Aufgabe wird erfindungsgemäß gelöst durch eine Wärmepumpenanlage mit den Merkmalen des Anspruchs 1. Die Wärmepumpenanlage weist hierbei einen ersten Kältekreislauf, einen zweiten Kältekreislauf und einen ersten Heizkreislauf auf. Als gemeinsame Komponente der drei genannten Kreisläufe ist ein Zwischenwärmetauscher vorgesehen. Der Zwischenwärmetauscher dient im ersten Kältekreislauf als Kondensator und im zweiten Kältekreislauf als Verdampfer. Zusätzlich ist der Zwischenwärmetauscher zur Einbringung von Energie aus dem ersten Kältekreislauf in den ersten Heizkreislauf nutzbar.

Die Kältekreisläufe sind, bezogen auf das jeweils in diesen strömende Kältemittel, nicht miteinander verbunden. Der Zwischenwärmetauscher weist daher drei voneinander getrennte Räume auf, nämlich einen für das Kältemittel des ersten Kältekreislaufs, einen für das Kältemittel des zweiten Kältekreislaufs und einen für den Heizkreislauf. Dabei ist der Zwischenwärmetauscher ausgelegt für eine besonderes effektive Energieübertragung zumindest zwischen dem Kältemittel des ersten Kältekreislaufs und dem Kältemittel des zweiten Kältekreislaufs sowie zwizwischen dem Kältemittel des ersten Kältekreislaufs und dem im ersten Heizkreislauf strömenden Medium.

Dem zweiten Kältekreislauf ist Wärmeenergie entnehmbar über einen in diesen integrierten Hochdruckkondensator. Die Funktion des Hochdruckkondensators im zweiten Kältekreislauf ist somit vergleichbar mit der Funktion des Zwischenwärmetauschers im ersten Kältekreislauf. Die Bezeichnung Hochdruckkondensator ist gewählt, da bei Nutzung des Zwischenwärmetauschers als Verdampfer des zweiten Kältekreislaufs das Temperatumiveau im Hochdruckkondensator höher ist als das Temperatumiveau in dem auch als Kondensator, nämlich des ersten Kältekreislaufs, dienenden Zwischenwärmetauscher. Damit ist zumindest bei identischen Kältemitteln im ersten und im zweiten Kältekreislauf das kältemittelseitige Druckniveau im Hochdruckkondensator höher als das Druckniveau des Kältemittels des ersten Kältekreislaufs im Zwischenwärmetauscher. Die Kältemittel in den beiden Kältekreisläufen sind jedoch nicht notwendigerweise identisch. Werden unterschiedliche Kältemittel gewählt, wobei das Kältemittel des zweiten Kältekreislaufs eine höhere Verdampfungstemperatur als das Kältemittel des ersten Kältekreislaufs aufweist, so besteht auch die Möglichkeit, dass das Druckniveau im Hochdruckkondensator in ähnliche Höhe ist wie der Druck des Kältemittels des ersten Kältekreislaufs im Zwischenwärmetauscher.

Nach einer bevorzugten Ausgestaltung ist ein Wärmeverbraucher, beispielsweise eine Heizung oder eine Heizeinrichtung einer Lüftung oder einer Warmwasserbereitung, welcher über den Hochdruckkondensator mit Wärmeenergie versorgbar ist, auch über den Zwischenwärmetauscher mit Wärmeenergie versorgbar. Der Heizkreislauf, welcher den Wärmeverbraucher über den Hochdruckkondensator mit Wärmeenergie versorgt, wird dabei als zweiter Heizkreislauf bezeichnet. Durch die Einbindung des Wärmeverbrauchers sowohl in den ersten als auch in den zweiten Heizkreislauf ist ein einfacher Anlagenaufbau, welcher eine besonders rationelle Nutzung in der Wärmepumpenanlage vorhandener Komponenten erlaubt, gegeben.

Nach einer bevorzugten Weiterbildung ist eine Regeleinrichtung vorgesehen, welche mit den beiden Kältekreisläufen und zumindest dem ersten der beiden Heizkreisläufe gekoppelt ist. Die Regeleinrichtung ermöglicht eine bedarfsabhängige Umschaltung zwischen verschiedenen Betriebsmodi der Wärmepumpenanlage. In einem ersten Betriebsmodus, dem so genannten Niederlastmodus, ist lediglich der erste Kältekreislauf in Betrieb. Aus dem Zwischenwärmetauscher wird Wärmeenergie direkt an den oben genannten, auch mit dem zweiten Kältekreislauf gekoppelten Wärmeverbraucher, oder an einen sonstigen, nicht notwendigerweise auch mit dem zweiten Kältekreislauf gekoppelten Wärmeverbraucher übertragen. In einem zweiten Betriebsmodus, auch als Hochlastmodus bezeichnet, sind beide Kältekreisläufe in Betrieb. Dabei erfolgt eine Wärmeübertragung im Zwischenwärmetauscher vom ersten Kältekreislauf zum zweiten Kältekreislauf. Der Zwischenwärmetauscher dient in diesem Fall somit gleichzeitig als Kondensator und als Verdampfer. Die Wärmeenergieversorgung des Wärmeverbrauchers erfolgt über den Hochdruckkondensator. Zusätzlich kann die Möglichkeit vorgesehen sein, einen zweiten Wärmeverbraucher, auf einem niedrigeren Temperaturniveau, direkt aus dem Zwischenwärmetauscher mit Wärmeenergie zu versorgen. Die Wärmepumpenanlage wird vorzugsweise zur Raumheizung eingesetzt. Das Regelverhalten der Regeleinrichtung ist bevorzugt außentemperaturabhängig.

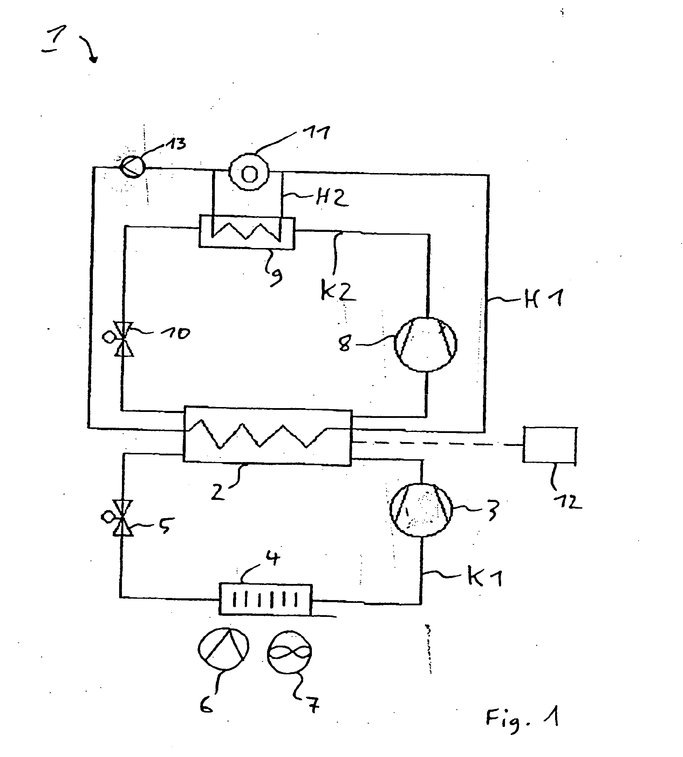

Nachfolgend wird ein Ausführungsbeispiel der Erfindung anhand einer Zeichnung näher erläutert. Hierin zeigt die einzige Figur ein schematisches Fließbild einer Wärmepumpenanlage.

Eine stark vereinfacht dargestellte Wärmepumpenanlage 1 ist als Hochtemperatur-Wärmepumpe mit zweistufiger Kaskadenschaltung über einen Zwischenwärmetauscher 2 ausgebildet und umfasst einen ersten Kältekreislauf K1, einen zweiten Kältekreislauf K2, einen ersten Heizkreislauf H1 und einen zweiten Heizkreislauf H2. Die Wärmepumpenanlage 1 ist primär zu Heizzwecken bestimmt, jedoch grundsätzlich auch als Kälteanlage nutzbar, welche mindestens ein nutzbares Temperaturniveau zur Verfügung stellt.

Der erste Kältekreislauf K1 wird auch als Niederdruckstufe bezeichnet. Hierbei saugt ein Verdichter 3 gasförmiges Kältemittel von einem Verdampfer 4 an und fördert das Kältemittel weiter zum Zwischenwärmetauscher 2, der als Kondensator im ersten Kältekreislauf K1 fungiert. Das im Zwischenwärmetauscher 2 kondensierte Kältemittel wird über ein auch als Drossel bezeichnetes Expansionsorgan 5 zurück zum Verdampfer 4 geleitet. Die Energiezufuhr zum Verdampfer 4 kann über ein flüssiges Medium, insbesondere Wasser, und/oder über ein gasförmiges Medium, insbesondere Luft, erfolgen. Je nach Art der Energiezufuhr ist eine Umwälzpumpe 6 und/oder ein Ventilator 7 vorgesehen.

Der zweite Kältekreislauf K2 umfasst einen Verdichter 8, welcher gasförmiges Kältemittel aus dem in diesem Fall als Verdampfer dienenden Zwischenwärmetauscher 2 ansaugt. Das verdichtete Kältemittel wird weitergeleitet zu einem Hochdruckkondensator 9 und in dann verflüssigter Form über ein Expansionsorgan 10 zurückgeleitet zum Zwischenwärmetauscher 2. Das Kältemittel des zweiten Kältekreislaufs K2 hat, sofern es nicht mit dem Kältemittel des ersten Kältekreislaufs K1 gleichartig ist, einen höheren Siedpunkt, bezogen auf Umgebungsdruck, als das letztgenannte Kältemittel. Hierdurch sind, bei höheren Temperaturen in den Apparaten des zweiten Kältekreislaufs K2 im Vergleich zu den entsprechenden Apparaten des ersten Kältekreislaufs K1, in beiden Kältekreisläufen K1,K2 zumindest annähernd gleiche Druckniveaus herstellbar. Dies begünstigt eine materialsparende Auslegung insbesondere des Zwischenwärmetauschers 2.

Der Zwischenwärmetauscher 2 ist weiterhin durchströmbar von einem Wärmeübertragungsmedium, insbesondere Wasser, eines ersten Heizkreislaufes H1. Im ersten Heizkreislauf H1 wird ein Wärmeverbraucher 11, beispielsweise ein oder mehrere Heizkörper oder eine Anlage zur Warmwasserbereitung, mit Wärmeenergie versorgt. Das Wärmeübertragungsmedium im ersten Heizkreislauf H1 wird mittels einer Umwälzpumpe 13 gefördert. Der Wärmeverbraucher 11 ist ferner in einen zweiten Heizkreislauf H2 eingebunden und durch diesen über den Hochdruckkondensator 9 mit Heizleistung versorgbar. Die Umwälzung des Wärmeübertragungsmediums im zweiten Heizkreislauf H2 erfolgt analog der Umwälzung im ersten Heizkreislauf H1.

Die Kältekreisläufe K1,K2 und die Heizkreisläufe H1,H2 sind regelungstechnisch verbunden mit einer Steuer- und Regeleinrichtung 12. Symbolisch ist lediglich eine Verbindung der Steuer- und Regeleinrichtung 12 mit dem Zwischenwärmetauscher 2, welcher Teil der Kältekreisläufe K1,K2 sowie des ersten Heizkreislaufs H1 ist, dargestellt. Nicht dargestellt ist ein Außentemperatursensor, welcher das Regelverhalten der Steuer- und Regeleinrichtung 12 beeinflusst. Wird nur eine relativ geringe Wärmeübertragungsleistung der Wärmepumpenanlage 1 gefordert, beispielsweise bei nur geringem Heizleistungsbedarf des Wärmeverbrauchers 11, so setzt die Steuer- und Regeleinrichtung 12 in einem Niederlastmodus lediglich den ersten Kältekreislauf K1 und den ersten Heizkreislauf H1 in Gang. Wird dagegen eine erhöhte Wärmeübertragungsleistung gefordert, so wird in einem Hochlastmodus zusätzlich zum ersten Kältekreislauf K1 der zweite Kältekreislauf K2 in Betrieb genommen. Des Weiteren wird der zweite Heizkreislauf H2 in Betrieb genommen; der erste Heizkreislauf H1 wird abgeschaltet. Beim Umschalten zwischen Niederlast- und Hochlastmodus können zeitweise beide Heizkreisläufe H1,H2 in Betrieb sein.

Im Zwischenwärmetauscher 2 ist somit in jedem Betriebsmodus das Kältemittel des ersten Kältekreislaufs K1 am Wärmeübertragungsvorgang beteiligt. Die Wärme wird übertragen entweder an den ersten Heizkreislauf H1 oder an den zweiten Kältekreislauf K2. Eine Beteiligung aller drei genannten Kreisläufe K1,H1,K2 am Wärmeübertragungsvorgang im Zwischenwärmetauscher 2 ist im dargestellten Ausführungsbeispiel zumindest während einer länger andauernden Betriebsphase nicht vorgesehen. Der Zwischenwärmetauscher 2 kann beispielsweise als Rohrbündelwärmetauscher ausgebildet sein, wobei das Kältemittel des ersten Kältekreislaufs K1 durch den Mantelraum strömt. Der Rohrraum des Zwischenwärmetauschers 2 setzt sich in diesem Fall zusammen aus zwei voneinander getrennten, jeweils eine Anzahl Rohre umfassender Teil-Rohrräumen, durch welche das Wärmeübertragungsmedium des ersten Heizkreislaufs H1 bzw. das Kältemittel des zweiten Kältekreislaufs K2 strömt. Eine Wärmeübertragung im Zwischenwärmetauscher 2 zwischen dem Kältemittel des zweiten Kältekreislaufs K2 und dem Wärmeübertragungsmedium des ersten Heizkreislaufs H1 ist nicht oder zumindest im Vergleich zur Wärmeübertragung zwischen dem Kältemittel des ersten Kältekreislaufs K1 und dem Wärmeübertragungsmedium des ersten Heizkreislauf H1 beziehungsweise zwischen dem Kältemittel des ersten Kältekreislaufs K1 und dem Kältemittel des zweiten Kältekreislaufs K2 nur in untergeordnetem Umfang vorgesehen. Der Zwischenwärmetauscher 2 kann grundsätzlich eine beliebige Bauform aufweisen, sofern in diesem strömungstechnisch drei Räume voneinander getrennt sind. Bei einer Ausbildung als Plattenwärmetauscher können beispielsweise drei Strömungsräume, nämlich jeweils ein Strömungsraum des ersten Kältekreislaufs K1, des zweiten Kältekreislaufs K2, und des ersten Heizkreislaufs H1, in der genannten Reihenfolge nebeneinander liegend angeordnet sein, wobei sich an den Strömungsraum des ersten Heizkreislaufs H1 wiederum ein Strömungsraum des ersten Kältekreislaufs anschließt. Auf diese Weise ist eine besonders effektive Energieübertragung vom ersten Kältekreislauf K1 sowohl zum zweiten Kältekreislauf K2 als auch zum ersten Heizkreislauf H1 ermöglicht.

Abweichend vom dargestellten Ausführungsbeispiel kann beim gleichzeitigen Betrieb beider Kältekreisläufe K1,K2 auch der erste Heizkreislauf H1 in Betrieb bleiben, wenn in diesen nicht der über den zweiten Heizkreislauf H2 vom Hochdruckkondensator 9 mit Wärme versorgte Wärmeverbraucher 11 sondern ein weiterer, nicht dargestellter Wärmeverbraucher auf einem im Vergleich zum Wärmeverbraucher 11 relativ niedrigen Temperaturniveau mit Heizleistung versorgt wird.

Ebenso kann auf diese Weise je nach Temperaturniveau auch Kälteleistung aus dem Zwischenwärmetauscher 2 entnommen werden. Die Wärmepumpenanlage 1 ist somit mit geringem apparativem Aufwand sehr flexibel nutzbar.

### Bezugszeichenliste

- 1: Wärmepumpenanlage
- 2: Zwischenwärmetauscher
- 3: Verdichter
- 4: Verdampfer
- 5: Expansionsorgan
- 6: Umwälzpumpe
- 7: Ventilator
- 8: Verdichter
- 9: Hochdruckkondensator
- 10: Expansionsorgan
- 11: Wärmeverbraucher
- 12: Steuer-und Regeleinrichtung
- 13: Umwälzpumpe

- H1: erster Heizkreislauf
- H2: zweiter Heizkreislauf
- K1: erster Kältekreislauf
- K2: zweiter Kältekreislauf

## Patentansprüche

1. Wärmepumpenanlage (1) mit
- einem ersten Kältekreislauf (K1) mit einem Zwischenwärmetauscher (2) als Kondensator,
- einem zweiten Kältekreislauf (K2) mit dem Zwischenwärmetauscher (2) als Verdampfer,
- einem ersten Heizkreislauf (H1), in dem ein Wärmeübertragungsmedium umgewälzt wird und in welchen mittels des Zwischenwärmetauschers (2) Energie aus dem ersten Kältekreislauf (K1) übertragbar ist, wobei
- der Zwischenwärmetauscher (2) direkt in den ersten Heizkreislauf (H1) geschaltet ist und ein zweiter Heizkreislauf (H2) vorgesehen ist, in dem ebenfalls ein Wärmeübertragungsmedium umgewälzt wird und in welchen ein in dem zweiten Kältekreislauf (K2) angeordneter Hochdruckkondensator (9) zur Energieübertragung aus dem zweiten Kältekreislauf (K2) geschaltet ist,
**gekennzeichnet durch**
einen gemeinsamen Wärmeverbraucher (11), nämlich eine Heizung oder eine Heizeinrichtung einer Lüftung oder einer Warmwasserbereitung, der sowohl in den ersten Heizkreislauf (H1) als auch in den zweiten Heizkreislauf (H2) eingebunden ist und entweder über den zweiten Heizkreislauf (H2) oder über den ersten Heizkreislauf (H1) mit Energie versorgbar ist, wobei der gemeinsame Wärmeverbrauche (11) sowohl von dem Wärmeübertragungsmedium des ersten Heizkreislaufs (H1) als auch von dem Wärmeübertragungsmedium des zweiten Heizkreislaufs (H2) durchströmbar ist.

2. Wärmepumpenanlage (1) nach Anspruch 1,
**dadurch gekennzeichnet,**
**dass** in den beiden Kältekreisläufen (K1,K2) verschiedene Kältemittel vorgesehen sind.

3. Wärmepumpenanlage (1) nach Anspruch 2,
**dadurch gekennzeichnet,**
**dass** das Kältemittel des ersten Kältekreislaufs (K1) einen niedrigeren Siedepunkt aufweist als das Kältemittel des zweiten Kältekreislaufs (K2).

4. Wärmepumpenanlage (1) nach einem der Ansprüche 1 bis 3,
**gekennzeichnet durch**
eine mit dem ersten Kältekreislauf (K1), dem zweiten Kältekreislauf (K2) und dem ersten Heizkreislauf (H1) gekoppelte Steuer- und Regeleinrichtung (12), welche eine bedarfsabhängige Umschaltung zwischen dem Betrieb nur eines Kältekreislaufs (K1) und dem Betrieb beider Kältekreisläufe (K1,K2) ermöglicht.

5. Wärmepumpenanlage (1) nach Anspruch 4,
**dadurch gekennzeichnet,**
**dass** das Regelverhalten der Steuer- und Regeleinrichtung (12) außentemperaturabhängig und/oder bedarfsabhängig ist.

## Claims

1. Heat pump system (1) comprising
- a first cooling circuit (K1) having an intermediate heat exchanger (2) as a condenser.
- a second cooling circuit (K2) having the intermediate heat exchanger (2) as an evaporator,
- a first heating circuit (H1), in which a heat transfer medium is circulated and in which, by means of the intermediate heat exchanger (2), energy can be transferred from the first cooling circuit (K1), whereat
- the intermediate heat exchanger (2) is connected directly with the first heating circuit (H1) and a second heating circuit (H2) is provided, in which a heat transfer medium is also being circulated and which is connected with a high pressure condenser (9) in the second cooling circuit (K2), for transferring energy from the second cooling circuit (K2),
**characterized in**
having a common heat consumer (11), namely a heater or a heating installation of a ventilation or of a water heating system, which is connected with the first heating circuit (H1) as well as the second heating circuit (H2) and which can be supplied with energy via either the second heating circuit (H2) or the first heating circuit (H1), whereat the heat transfer medium of the first heating circuit (H1) as well as the heat transfer medium of the second heating circuit (H2) can flow through the common heat consumer (11).

2. Heat pump system (1) according to claim 1,
**characterized in that**
different cooling agents are provided for in the two cooling circuits (K1, K2).

3. Heat pump system (1) according to claim 2,
**characterized in that**
the cooling agent of the first cooling circuit (K1) has a lower boiling point than the cooling agent of the second cooling circuit (K2).

4. Heat pump system (1) according to one of the claims 1 to 3,
**characterized in**
having a control unit (12), which is connected with the first cooling circuit (K1), the second cooling circuit (K2) and the first heating circuit (H1), and which allows for switching between the operation of just one cooling circuit (K1) and the operation of both cooling circuits (K1, K2) as needed.

5. Heat pump system (1) according to claim 4,
**characterized in that**
the control behavior of the control unit (12) is dependent on the outside temperature and / or dependent on demand.

## Revendications

1. Installation de pompe à chaleur (1) comprenant
- un premier circuit de cycle frigorifique (K1) avec un échangeur de chaleur intermédiaire (2) en tant que condenseur,
- un deuxième circuit de cycle frigorifique (K2) avec l'échangeur de chaleur intermédiaire (2) en tant qu'évaporateur,
- un premier circuit de chauffage (H1) dans lequel on fait circuler un fluide caloporteur et auquel peut être transférée, au moyen de l'échangeur de chaleur intermédiaire (2), de l'énergie en provenance du premier circuit de cycle frigorifique (K1), installation dans laquelle
- l'échangeur de chaleur intermédiaire (2) est monté directement dans le premier circuit de chauffage (H1), et il est prévu un deuxième circuit de chauffage (H2) dans lequel on fait également circuler un fluide caloporteur et dans lequel est monté un condenseur haute pression (9) agencé dans le deuxième circuit de cycle frigorifique (K2), pour le transfert d'énergie en provenance du deuxième circuit de cycle frigorifique (K2),
**caractérisée par**
un dissipateur de chaleur (11) commun, à savoir un système de chauffage ou un dispositif de chauffage d'un système de ventilation ou d'un système de production d'eau chaude, qui est intégré aussi bien au premier circuit de chauffage (H1) qu'au deuxième circuit de chauffage (H2), et peut être alimenté en énergie soit par l'intermédiaire du deuxième circuit de chauffage (H2), soit par l'intermédiaire du premier circuit de chauffage (H1), le dissipateur de chaleur (11) commun pouvant être traversé par l'écoulement aussi bien du fluide caloporteur du premier circuit de chauffage (H1) que du fluide caloporteur du deuxième circuit de chauffage (H2).

2. Installation de pompe à chaleur (1) selon la revendication 1, **caractérisée en ce que** dans les deux circuits de cycle frigorifique (K1, K2) sont prévus des fluides frigorigènes différents.

3. Installation de pompe à chaleur (1) selon la revendication 2, **caractérisée en ce que** le fluide frigorigène du premier circuit de cycle frigorifique (K1) présente un point d'ébullition plus bas que le fluide frigorigène du deuxième circuit de cycle frigorifique (K2).

4. Installation de pompe à chaleur (1) selon l'une des revendications 1 à 3, **caractérisée par** un dispositif de commande et de régulation (12), qui est couplé au deuxième circuit de cycle frigorifique (K2), au premier circuit de cycle frigorifique (K1) et au premier circuit de chauffage (H1), et permet une commutation, en fonction de la demande, entre un fonctionnement de seulement un seul circuit de cycle frigorifique (K1) et le fonctionnement des deux circuits de cycle frigorifique (K1, K2).

5. Installation de pompe à chaleur (1) selon la revendication 4, **caractérisée en ce que** le mode de régulation du dispositif de commande et de régulation (12) est fonction de la température extérieure et/ou fonction de la demande.
